# EUROPÄISCHE PATENTSCHRIFT

(11) **EP 4 314 616 B1**
(45) Veröffentlichungstag und Bekanntmachung des Hinweises auf die Patenterteilung: **23.10.2024**
(21) Anmeldenummer: 22716194.0
(22) Anmeldetag: 17.03.2022
(51) Int. Cl.: F16L 13/14, F16L 23/08, F16L 23/18, B21D 39/04, B23P 11/00

(54) **SYSTEM MIT EINER VORRICHTUNG ZUR HERSTELLUNG EINER ROHRLEITUNGSEINHEIT UND VERFAHREN ZUR HERSTELLUNG EINER ROHRLEITUNGSEINHEIT**
SYSTEM HAVING A DEVICE FOR PRODUCING A PIPELINE UNIT AND METHOD FOR PRODUCING A PIPELINE UNIT
SYSTÈME COMPRENANT UN DISPOSITIF DE PRODUCTION D'UNE UNITÉ DE CONDUITE ET PROCÉDÉ DE FABRICATION D'UNE UNITÉ DE CONDUITE

(30) Priorität: 24.03.2021 DE 102021202883
(43) Veröffentlichungstag der Anmeldung: 07.02.2024
(73) Patentinhaber: Glatt Gesellschaft mit beschränkter Haftung, 79589 Binzen (DE)
(72) Erfinder: NOWAK, Mirko, 79540 Lörrach (DE); NOWAK, Reinhard, 79540 Lörrach (DE)
(74) Vertreter: Patentanwälte Magenbauer & Kollegen Partnerschaft mbB
(86) Internationale Anmeldenummer: PCT/EP2022/056941
(87) Internationale Veröffentlichungsnummer: WO 2022/200159

(56) Entgegenhaltungen:
- DE-U1- 202020 100 379
- FR-E- 5 702
- GB-A- 2 561 839
- JP-A- S5 316 777
- US-A- 2 381 747
- US-A- 3 019 520
- US-A1- 2012 139 236
- US-A1- 2014 361 535

## Beschreibung

Die Erfindung betrifft ein System mit einem Druckwerkzeug zum Aufweiten einer Rohrleitung und mit einer Vorrichtung zur Herstellung einer Rohrleitungseinheit aus der eine Rohrleitungsaußenfläche aufweisenden Rohrleitung und einem über eine Rohrstutzenaußenfläche verfügenden Rohrstutzen, wobei die Vorrichtung eine eine Längsmittelachse und eine nach radial innen weisende Spannungsaufnahmevorrichtungsinnenfläche aufweisende, ringförmig strukturierte Spannungsaufnahmevorrichtung aufweist, wobei die Spannungsaufnahmevorrichtungsinnenfläche an die Rohrleitungsaußenfläche und/oder die Rohrstutzenaußenfläche angepasst ist, um so die herzustellende Rohrleitungseinheit in einem Betriebszustand zumindest teilweise aufzunehmen, und die Spannungsaufnahmevorrichtung im Betriebszustand das Druckwerkzeug umgibt, um im Betriebszustand beim Aufweiten der Rohrleitung durch das Druckwerkzeug die herzustellende Rohrleitungseinheit abzustützen.

Des Weiteren betrifft die Erfindung ein Verfahren zur Herstellung einer Rohrleitungseinheit.

Bisher werden druckbeaufschlagte Rohrleitungsanordnungen nach DIN 11864-3 mittels Nut- und Bundklemmstutzen realisiert, wobei diese jeweils an ein Rohrleitungsende geschweißt werden.

Die Schweißnähte der druckbeaufschlagten Rohrleitungsanordnung müssen anschließend aufwendig nachbehandelt und geprüft werden. Eine Dichtung, insbesondere ein O-Ring wird in den Nutklemmstutzen eingelegt. Eine Spanneinrichtung verbindet Nut- und Bundklemmstutzen, wobei ein am Nutklemmstutzen angeordneter mechanischer Anschlag dafür sorgt, dass der O-Ring definiert angepresst wird. Durch den Anpressdruck wird der O-Ring teilweise aus der Nut drückt, sodass sich ein definierter Übergang zwischen Nut- und Bundklemmstutzen im Inneren der Rohrleitungsanordnung ergibt.

Entsprechend einer weiteren nach DIN 32676 hergestellten Rohrleitungsanordnung wird diese durch zwei eine Dichtung aufnehmende Anschweißstutzen realisiert. Ein Nachteil dieser Rohrleitungsanordnung ist es, dass die Schweißnähte der druckbeaufschlagten Rohrleitungsanordnung anschließend aufwendig nachbehandelt und geprüft werden müssen. Zudem nachteilig ist, dass die Dichtung keinen definierten Anpressdruck aufweist, sondern dieser durch die Spanneinrichtung bestimmt wird.

Auch bekannt ist es Rohrstutzen auf Rohrleitungen aufzuwalzen und die Rohrstutzen entsprechend gegen Verdrehen zu sichern. Ein diesbezügliches Verfahren ist in der Patentschrift DE 484 005 A offenbart. Hierzu sind an einzelnen Stellen des Rohrabschnittes des Rohrstutzens Löcher oder Aushöhlungen der Innenwand vorgesehen, in die die Rohrleitung mit von innen herausgedrückten Ausbeulungen eingreift.

JP S53 16777 A zeigt ein Verfahren zur Herstellung einzelner Rohre, wobei am jeweiligen Ende der Rohre eine Aufweitung erzeugt wird. Hierbei wird das Rohr durch ein Druckwerkzeug von Ihnen aufgeweitet und außen von einer Aufnahmevorrichtung abgestützt.

In GB 2 561 839 A wird ein Verfahren zur Erweiterung eines Durchmessers einer rohrförmigen Struktur offenbart. Das Verfahren umfasst das Anbringen einer abnehmbaren Aufnahme um eine Außenfläche der rohrförmigen Struktur und das Einsetzen eines im Wesentlichen rohrförmigen metallischen Einsatzes in die rohrförmige Struktur. Dabei weist der metallische Einsatz einen Außendurchmesser auf, der kleiner ist als ein Innendurchmesser der rohrförmigen Struktur. Das Verfahren umfasst das Drücken des Metalleinsatzes in radialer Richtung nach au-βen in die rohrförmige Struktur, um den metallischen Einsatz und die rohrförmige Struktur aufzuweiten. Der metallische Einsatz ist so angeordnet, dass das Drücken zu einer Kaltverfestigung des metallischen Einsatzes führt. Insbesondere zeigt GB 2 561 839 A ein Verfahren zum Herstellen einer Verbindung an einem Polyolefinrohr oder zum Verbinden von zwei solchen Polyolefinrohren, wobei das Verfahren auch die Installation eines Elektroschweißfittings über einer Außenfläche eines Rohrs oder von Rohren, das Aktivieren des Elektroschweißfittings, um den Endbereich oder die Endbereiche des Rohrs oder der Rohre mit dem Elektroschweißfitting zu verschmelzen.

In US 2014/361535 A1 wird ein Verfahren zur Verbindung eines ersten Anschlussstücks mit einem zweiten Anschlussstück zur Bereitstellung einer Fluidkopplung zwischen dem ersten Anschlussstück und dem zweiten Anschlussstück gezeigt, wobei das Verfahren das Bereitstellen eines ersten Anschlussstücks mit einer äußeren Oberfläche, das Bereitstellen eines zweiten Anschlussstücks mit einer inneren Oberfläche und einer ringförmigen Nut, die an der inneren Oberfläche vorgesehen ist, das Positionieren des ersten Anschlussstücks mindestens teilweise innerhalb des zweiten Anschlussstücks und Verformen des ersten Anschlussstücks in einer allgemeinen ringförmigen Richtung zur Bildung einer ringförmigen Wulst, die sich mindestens teilweise in die ringförmige Nut erstreckt, um das erste Anschlussstück mit dem zweiten Anschlussstück zu verbinden.

US 2 381 747 A zeigt ebenfalls eine verbesserte Verbindung für Rohre und dergleichen sowie ein verbessertes Verfahren zur Herstellung solcher Verbindungen und ein Werkzeug, das in Verbindung mit einem solchen Verfahren verwendet wird. Das Verfahren zum Befestigen von Aderendhülsen an Rohren, weist ein Werkzeug auf, das ein abnehmbares Rohrumschließungsmittel mit einem Aderendhülsen-Eingriffsabschnitt hat, der geeignet ist, mit einer Kante einer Aderendhülse auf dem Rohr in Eingriff zu kommen, ein Hammerelement, das mit Öffnungen versehen ist, um das Ende des Rohres aufzunehmen, wobei das Hammerelement einen Abschnitt aufweist, der der gegenüberliegenden Kante der Aderendhülse gegenüberliegt, und ein Verbindungsmittel zwischen dem Rohrumschließungsmittel und dem Hammerelement, das geeignet ist, das Hammerelement für eine axiale Bewegung in Richtung des Endes des Rohres in Reaktion auf einen Betätigungsschlag auf das Hammerelement zu führen.

Die Aufgabe der Erfindung ist es daher ein System mit einem Druckwerkzeug zum Aufweiten einer Rohrleitung und einer Vorrichtung zur Herstellung einer Rohrleitungseinheit und ein Verfahren zur Herstellung einer Rohrleitungseinheit bereitzustellen.

Diese Aufgabe wird von einem System nach Anspruch 1 gelöst. Bei einem System der eingangs genannten Art weist die Spannungsaufnahmevorrichtung einen Spannungsaufnahmevorrichtungsringkörper auf, der über zwei gemeinsam die Spannungsaufnahmevorrichtungsinnenfläche ausbildende Ringkörperelemente verfügt, die jeweils einen ersten Endabschnitt und einen zweiten Endabschnitt aufweisen, wobei die ersten Endabschnitte um eine Schwenkachse schwenkbeweglich zueinander angeordnet sind, und wobei an jedem zweiten Endabschnitt ein Verbindungselement angeordnet ist und die Verbindungselemente geeignet sind, miteinander zusammenzuwirken, um die zweiten Endabschnitte lösbar zu verbinden, wobei die Spannungsaufnahmevorrichtungsinnenfläche wenigstens eine Ringnut zur wenigstens teilweisen Aufnahme des Rohrstutzens aufweist, wobei die Spannungsaufnahmevorrichtung einen radial nach innen ragenden Ringvorsprung ausbildet, der einerseits von einer ersten axialen Spannungsaufnahmevorrichtungsstirnfläche und andererseits von einer der ersten axialen Spannungsaufnahmevorrichtungsstirnfläche abgewandten, seitlichen Nutbegrenzungsfläche der wenigstens einen Ringnut begrenzt ist, und wobei die Spannungsaufnahmevorrichtung eine der ersten axialen Spannungsaufnahmevorrichtungsstirnfläche entgegengesetzte zweite axiale Spannungsaufnahmevorrichtungsstirnfläche aufweist, die stufenförmig ausgebildet ist, wodurch sich ein die in den Rohrstutzen eingesteckte Rohrleitung radial abstützender ringförmiger Spannungsaufnahmevorrichtungskragen ausbildet. Vorteilhafterweise wird durch das System die Rohrleitungseinheit, insbesondere die Rohrleitung und/oder der Rohrstutzen, beim Aufweiten der Rohrleitung durch das Druckwerkzeug, zweckmäßigerweise ein Einwalzwerkzeug, abgestützt, sodass ein Verbinden von Rohrleitungseinheit und Rohrstutzen zur Rohrleitungseinheit verbessert erfolgt. Ein solches System weist weiter den Vorteil auf, dass die Spannungsaufnahmevorrichtung einfach an der Rohrleitung und dem Rohrstutzen anordenbar ist. Ferner wird durch die Ringnut der Rohrstutzen und damit zumindest auch indirekt die Rohrleitung axial positioniert und in dieser Position gehalten. Ferner wird die Rohrleitung durch die Spannungsaufnahmevorrichtung zusätzlich verbessert abgestützt.

Zweckmäßigerweise verfügt das System über die die Rohrleitung und den Rohrstutzen aufweisende Rohrleitungseinheit.

Nach einer zusätzlichen vorteilhaften Ausgestaltung des Systems ist die Spannungsaufnahmevorrichtungsinnenfläche stufenförmig ausgebildet. Hierdurch ist die Möglichkeit gegeben, dass die Spannungsaufnahmevorrichtungsinnenfläche an unterschiedlichste Konturen und/oder Flächen von einer aus einer Rohrleitung und einem Rohrstutzen hergestellten Rohrleitungseinheit anpassbar ist.

Gemäß einer weiteren Fortbildung des Systems ragt der radial nach innen ragende Ringvorsprung soweit radial nach innen, dass der Ringvorsprung einen Anschlag für die in den Rohrstutzen eingesteckte Rohrleitung ausbildet. Der radial nach innen ragende als Anschlag ausgebildete Ringvorsprung ermöglicht eine einfache Positionierung und/oder Fixierung der Rohrleitung während des Aufweitens der Rohrleitung durch das Druckwerkzeug.

Weiterhin wird diese Aufgabe von einem Verfahren nach Anspruch 5 gelöst. Bei bei einem Verfahren der eingangs genannten Art sind zur Herstellung einer Rohrleitungseinheit unter Verwendung eines Systems nach einem der Ansprüche 1 bis 4 die Verfahrensschritte Bereitstellen einer Rohrleitung, Bereitstellen eines Rohrstutzens, Anordnen des Rohrstutzens an der Rohrleitung, Bereitstellen der Spannungsaufnahmevorrichtung, Aufnahme der aus Rohrleitung und Rohrstutzen herzustellenden Rohrleitungseinheit in die Spannungsaufnahmevorrichtung und Verschließen der Spannungsaufnahmevorrichtung, Bereitstellen des Druckwerkzeuges, Einstecken des Druckwerkzeuges in die Rohrleitung, sodass die Spannungsaufnahmevorrichtung im Betriebszustand das Druckwerkzeug umgibt, Aufweiten der Rohrleitung, um Rohrleitung und Rohrstutzen mittels einer Presspassung zur Rohrleitungseinheit zu verbinden, Herausnehmen des Druckwerkzeuges aus der Rohrleitung und Öffnen der Spannungsaufnahmevorrichtung und Entnahme der aus Rohrleitung und Rohrstutzen hergestellten Rohrleitungseinheit umfasst.

Vorteilhafterweise wird durch das Verfahren das System, insbesondere der Rohrstutzen, beim Aufweiten der Rohrleitung durch das Druckwerkzeug abgestützt, sodass ein Verbinden von Rohrleitungseinheit und Rohrstutzen zur Rohrleitungseinheit verbessert erfolgt.

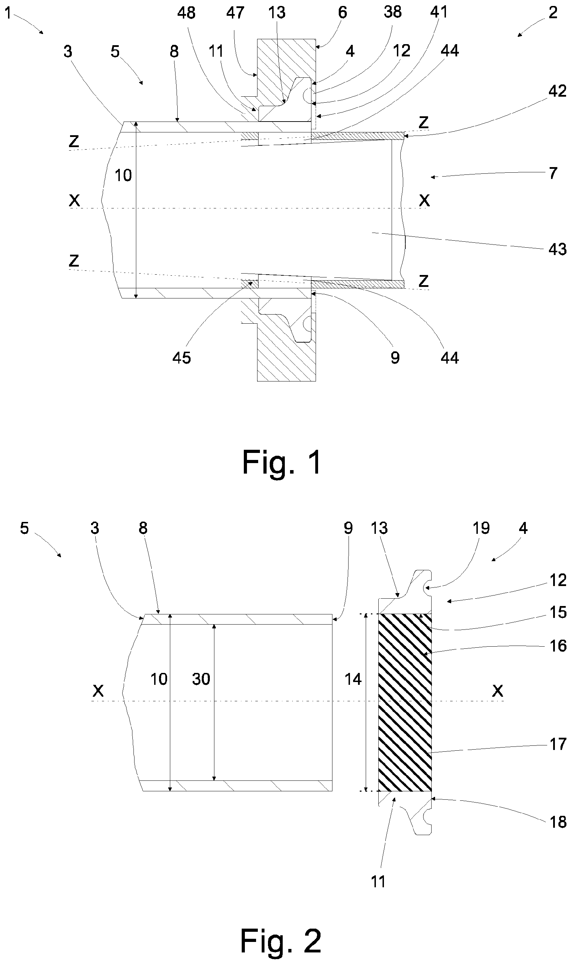

Nachfolgend wird die Erfindung anhand der beiliegenden Zeichnung näher erläutert und in dieser zeigen
- Figur 1: eine Schnittdarstellung einer Ausführungsform eines Systems mit einer Vorrichtung zur Herstellung einer Rohrleitungseinheit,
- Figur 2: eine Schnittdarstellung einer durch radiales Aufweiten einer Rohrleitung aus Rohrleitung und Rohrstutzen herzustellenden Rohrleitungseinheit,

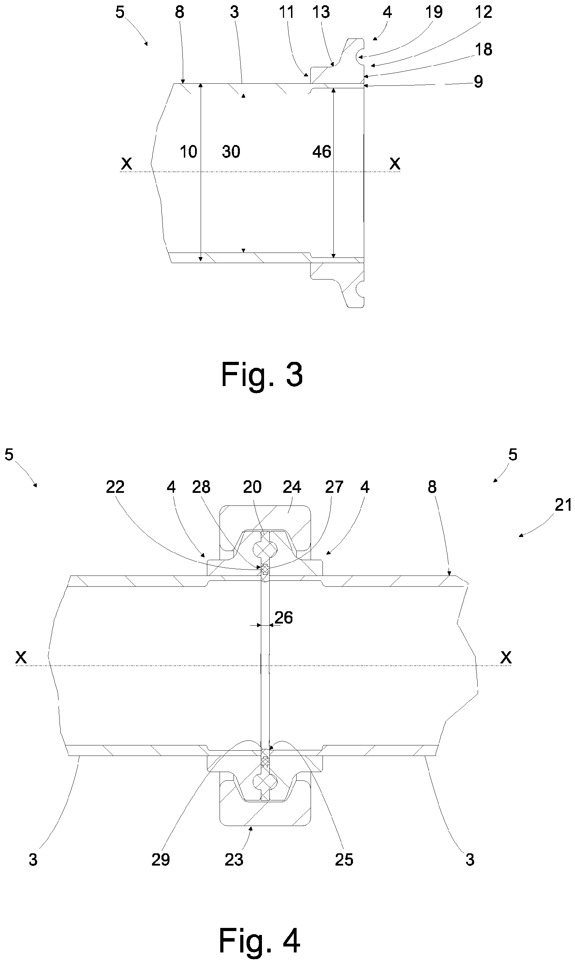

- Figur 3: eine Schnittdarstellung der in Fig. 2 gezeigten durch radiales Aufweiten der Rohrleitung aus Rohrleitung und Rohrstutzen hergestellten Rohrleitungseinheit,
- Figur 4: eine Schnittdarstellung einer zwei Rohrleitungseinheiten aufweisenden Rohrleitungsanordnung,

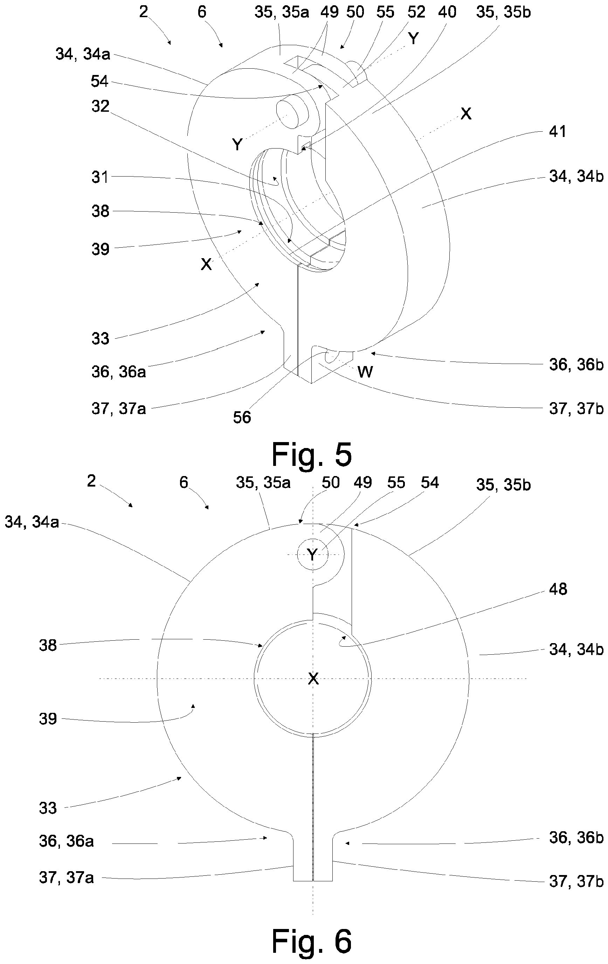

- Figur 5: eine perspektivische Darstellung einer Ausführungsform einer Spannungsaufnahmevorrichtung in geschlossenem Zustand,
- Figur 6: eine Vorderansicht der in Fig. 5 dargestellten Spannungsaufnahmevorrichtung,

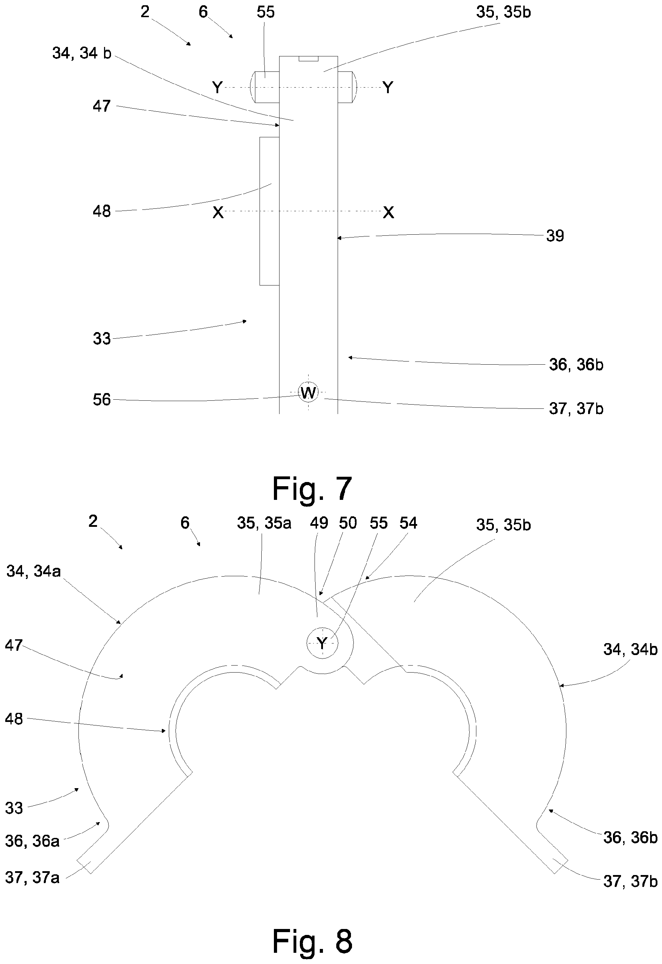

- Figur 7: eine Seitenansicht von rechts der in Fig. 5 dargestellten Spannungsaufnahmevorrichtung,
- Figur 8: eine Rückansicht der in Fig. 5 gezeigten Spannungsaufnahmevorrichtung in geöffnetem Zustand,

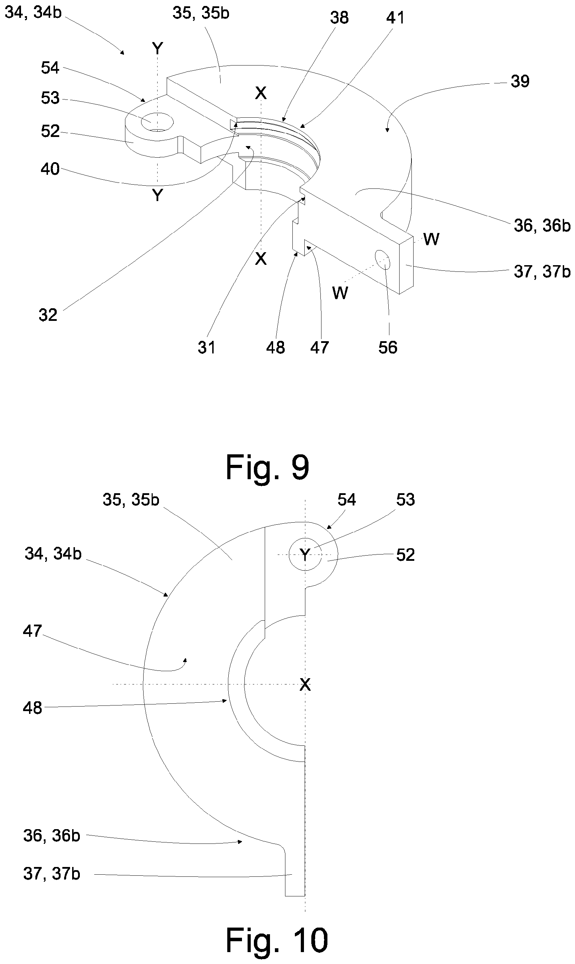

- Figur 9: eine perspektivische Darstellung eines ersten Ringkörperelementes der in Fig. 5 dargestellten Spannungsaufnahmevorrichtung,
- Figur 10: eine Rückansicht des ersten in Fig. 9 gezeigten Ringkörperelementes,

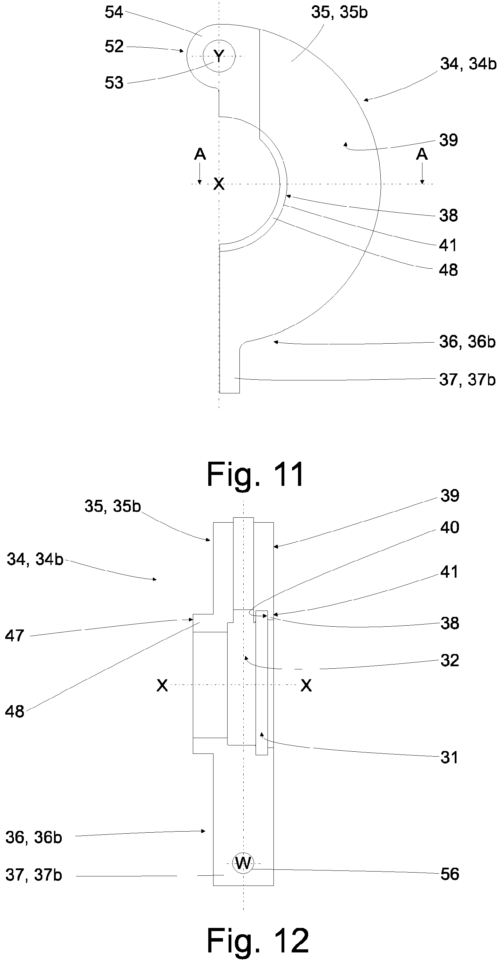

- Figur 11: eine Vorderansicht des ersten in Fig. 9 gezeigten Ringkörperelementes,
- Figur 12: eine Seitenansicht von links des ersten in Fig. 9 gezeigten Ringkörperelementes,
- Figur 13: eine Schnittdarstellung des ersten Ringkörperelements entlang Schnitt A-A,
- Figur 14: eine perspektivische Darstellung eines zweiten Ringkörperelementes der in Fig. 5 dargestellten Spannungsaufnahmevorrichtung,

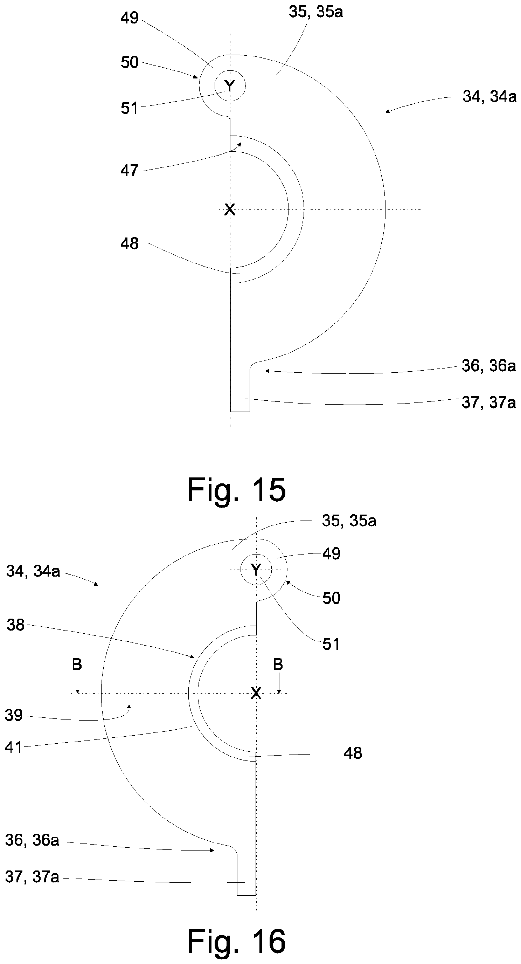

- Figur 15: eine Rückansicht des in Fig. 14 dargestellten zweiten Ringkörperelementes der in Fig. 5 dargestellten Spannungsaufnahmevorrichtung,
- Figur 16: eine Vorderansicht des zweiten in Fig. 14 dargestellten Ringkörperelementes und
- Figur 17: eine Seitansicht eines Teilschnitts des zweiten in Fig. 14 dargestellten Ringkörperelementes.

Sofern keine anderslautenden Angaben gemacht werden, bezieht sich die nachfolgende Beschreibung auf sämtliche in der Zeichnung illustrierten Ausführungsformen eines Systems 1 mit einer Vorrichtung 2 zur Herstellung einer eine Rohrleitung 3 und einen Rohrstutzen 4 aufweisenden Rohrleitungseinheit 5.

Das System 1 mit der Vorrichtung 2 zur Herstellung der Rohrleitungseinheit 5 weist in der gezeigten Ausführungsform die Rohrleitung 3, den Rohrstutzen 4, eine Spannungsaufnahmevorrichtung 6 und ein Druckwerkzeug 7 auf, das zweckmäßigerweise als Einwalzwerkzeug ausgebildet ist. Die Rohrleitung 3, der Rohrstutzen 4, die Spannungsaufnahmevorrichtung 6 und das Druckwerkzeug 7 weisen eine Längsmittelachse X-X auf und sind an dieser im Betriebszustand ausgerichtet.

Die Rohrleitung 3 weist eine Rohrleitungsaußenfläche 8, eine Rohrleitungsstirnfläche 9 und einen Rohrleitungsaußendurchmesser 10 auf. Außerdem ist die Rohrleitung 3 entsprechend einer Vorgabe in Bezug auf eine Rohrlänge und eine Rohrbiegung ausgebildet, wobei in der Ausführungsform eine gerade Rohrleitung 3 verwendet wird.

Der Rohrstutzen 4 weist einen Rohrabschnitt 11 und einen Flanschabschnitt 12 auf und verfügt über eine Rohrstutzenaußenfläche 13, einen Rohrstutzeninnendurchmesser 14 sowie eine Rohrstutzeninnenfläche 15. Auf der Rohrstutzeninnenfläche 15 ist eine Struktur 16 in Form von Erhebungen 17 ausgebildet. In anderen nicht dargestellten Ausführungsformen ist vor dem radialen Aufweiten der Rohrleitung 3 die Rohrleitungsaußenfläche 8 und/oder die Rohrstutzeninnenfläche 15 zumindest teilweise strukturiert. Die Struktur 16 ist nicht zwingend in Form von Erhebungen 17 auszubilden, sondern ist bspw. auch in Form von Vertiefungen, Rillen, Nuten oder dergleichen ausbildbar. Durch auf der Rohrstutzeninnenfläche 15 angeordnete Struktur 16 wird durch das Aufweiten der Rohrleitung 3 neben einer kraftschlüssigen auch eine formschlüssige Verbindung zwischen Rohrleitung 3 und Rohrstutzen 4 hergestellt.

Darüber hinaus weist der Flanschabschnitt 12 des Rohrstutzens 4 eine Flanschabschnittsstirnfläche 18 auf, wobei in der Flanschabschnittstirnfläche 18 eine Nut 19 zur teilweisen Aufnahme einer Dichtung 20 ausgebildet ist.

In der gezeigten Ausführungsform sind der Rohrleitungsaußendurchmesser 10 der Rohrleitung 3 und der Rohrstutzeninnendurchmesser 14 des Rohrstutzens 4 im Wesentlichen gleich groß.

In einer anderen nicht gezeigten Ausführungsform ist der Rohrleitungsaußendurchmesser 10 der Rohrleitung 3 größer, zweckmäßigerweise minimal größer als der Rohrstutzeninnendurchmesser 14 des Rohrstutzens 4. Somit wird unmittelbar beim axialen Aufstecken des Rohrstutzens 4 auf die Rohrleitung 3 eine Presspassung erzeugt. Eine solche Presspassung stellt eine kraftschlüssige Verbindung von Rohrleitung 3 und Rohrstutzen 4 her.

Bevorzugt wird vor dem Aufstecken des Rohrstutzens 4 auf die Rohrleitung 3 der Rohrstutzen 4 erwärmt und/oder die Rohrleitung 3 gekühlt. Auch eine Kühlung des Rohrstutzens 4 und/oder eine Erwärmung der Rohrleitung 3 ist in diesem Zusammenhang ausführbar.

Eine Rohrleitungsanordnung 21 weist zwei jeweils einen auf eine Rohrleitung 3 axial aufgesteckten Rohrstutzen 4 umfassende Rohrleitungseinheiten 5 auf, wobei axial zwischen den Rohrleitungseinheiten 5 eine einen Dichtungseinsatz 22 aufweisende Dichtung 20 angeordnet ist.

Die beiden Rohrleitungseinheiten 5 der Rohrleitungsanordnung 21 sind in der Ausführungsform mittels einer Spanneinrichtung 23 axial miteinander verspannt. Hierzu werden die Flanschabschnitte 12 der Rohrstutzen 4 der zwei Rohrleitungseinheiten 5 mittels der Spanneinrichtung 23 axial miteinander verspannt. In der Ausführungsform ist die Spanneinrichtung 23 zweckmäßigerweise als Gelenkklammer 24 ausgebildet. Durch die als Gelenkklammer 24 ausgebildete Spanneinrichtung 23 können die auf die Dichtung 20 wirkenden Anpresskräfte, die auf die Fläche bezogen, einem Anpressdruck entsprechen, zusätzlich, z. B. durch eine die Gelenkklammer 24 schließende Flügelmutter oder dergleichen, eingestellt werden.

Alternativ können auch Normteile, wie bspw. Messinstrumente, Ventile und Klappen oder dergleichen, hierbei als vorausgebildete Rohrleitungseinheit 5 dienen und mit einer anderen zweiten Rohrleitungseinheit 5 gemäß der Ausführungsform zusammen eine Rohrleitungsanordnung 21 ausbilden.

Die Rohrleitungsanordnung 21 weist eine axial zwischen den an den Flanschabschnitten 12 ausgebildeten Flanschabschnittsstirnflächen 18 der Rohrstutzen 4 angeordnete Dichtung 20 auf. Die Dichtung 20 ist konfiguriert, um einen definierten Übergang 25 zwischen den zwei miteinander verspannten Rohrleitungseinheiten 5 auszubilden. Der definierte Übergang 25 wird durch die beim Verspannen auf die Dichtung 20 wirkenden Anpresskräfte ausgebildet.

Durch den definierten Übergang 25 wird ein Ansammeln von Rückständen bzw. ein Anlagern von Feststoffen des durch die Rohrleitungsanordnung 21 strömenden Mediums oder der durch die Rohrleitungsanordnung 21 strömenden Medien reduziert bzw. findet nicht statt.

Zudem weist die Dichtung 20 einen Dichtungseinsatz 22 auf. Durch den Dichtungseinsatz 22 wird ein axialer Mindestabstand 26 zwischen den zwei Rohrleitungseinheiten 5 definiert, sodass die zwei Rohrleitungseinheiten 5 beim Verspannen der Rohrleitungsanordnung 21 Anpresskräften ausgesetzt sind, die durch den aufgrund des Dichtungseinsatzes 22 festgelegten, axialen Mindestabstand 26 festgelegt sind.

Die Dichtung 20 ist bevorzugt als Flachdichtung ausgebildet, wobei als Dichtungswerkstoff Werkstoffe wie z. B. Elastomere, Pressfaser, Aramidfaser, Kohlenstofffaser, Mineralfaser, Metall, Kupfer zur Verfügung stehen. Auch ummantelte Dichtungen 20, insbesondere ummantelte Flachdichtungen, sind bevorzugt, wobei diese einen von einer PTFE- oder Metallhülle, vorzugsweise Stahl oder korrosionsbeständige Nickellegierungen, umhüllten Kern (beliebiger Flachdichtungswerkstoff bspw. Faserverbund, PTFE usw.) umfasst. Die Ummantelung schützt den Kern gegen chemischen Angriff vom abzudichtenden Medium.

Der Dichtungseinsatz 22 der Dichtung 20 verfügt über eine als Dichtungsanschlag 27 ausgebildete Dichtungseinsatzstirnfläche 28. Durch den Dichtungseinsatz 22 wird somit zwischen den zwei Rohrleitungseinheiten 5 ein axialer Mindestabstand 26 definierbar oder definiert. Die Rohrleitungsstirnflächen 9 und/oder die Flanschabschnittsstirnflächen 18 grenzen im verspannten Zustand der Rohrleitungsanordnung 21 an die Dichtungseinsatzstirnflächen 28 des Dichtungseinsatzes 22 der Dichtung 20 an. Hierdurch werden der Mindestabstand 26 zwischen den zwei Rohrleitungseinheiten 5 der Rohrleitungsanordnung 21 und somit auch die auf die Dichtung 20 wirkenden Anpresskräfte genau eingestellt.

Der durch die mittels des Dichtungseinsatzes 22 festgelegten Anpresskräfte definierte Übergang 25 ist bevorzugt so ausgebildet, dass die Wölbung 29 gegenüber einem aufgeweiteten Rohrleitungsinnendurchmesser 30 einen stumpfen Winkel α bildet. Besonders bevorzugt weist der stumpfe Winkel α einen Winkel α zwischen 100° und 170°, ganz besonders bevorzugt zwischen 120° und 150° auf. Hierdurch wird erreicht, dass Rückstände des die Rohrleitungsanordnung 21 durchströmenden Mediums oder der die Rohrleitungsanordnung 21 durchströmenden Medien reduziert bzw. verhindert werden.

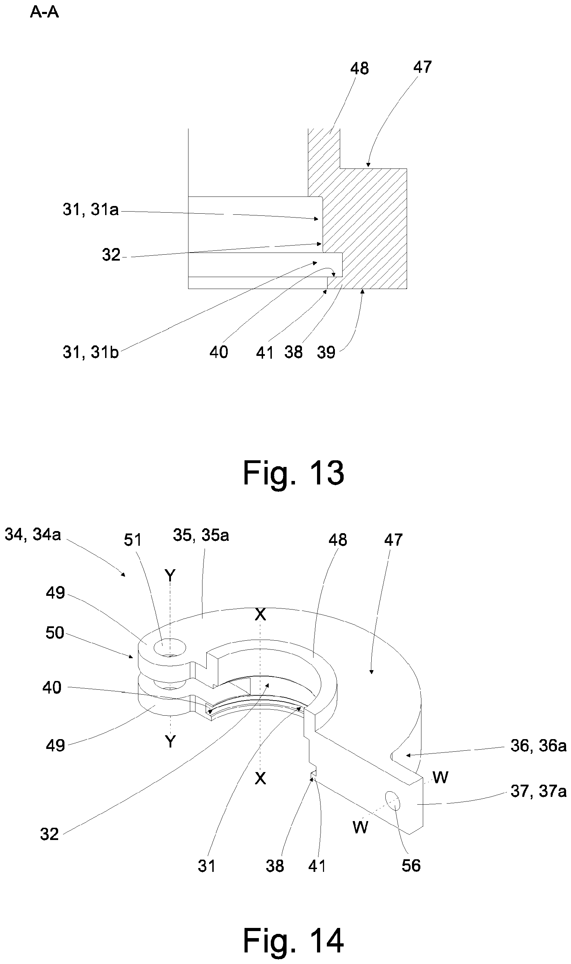

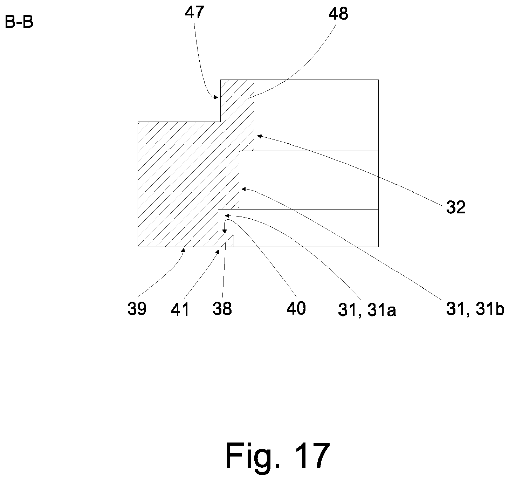

Die Vorrichtung 2 weist eine ringförmig strukturierte, über eine Längsmittelachse X-X verfügende Spannungsaufnahmevorrichtung 6 auf. Die Spannungsaufnahmevorrichtung 6 verfügt über wenigstens eine Ringnut 31, wodurch eine nach radial innen weisende Spannungsaufnahmevorrichtungsinnenfläche 32 stufenförmig zur zumindest teilweisen Aufnahme der herzustellenden Rohrleitungseinheit 5, insbesondere jedoch zumindest des Rohrstutzens 4, im Betriebszustand ausgebildet ist. Zweckmäßigerweise ist daher die Spannungsaufnahmevorrichtungsinnenfläche 32 an die Rohrleitungsaußenfläche 8 und/oder die Rohrstutzenaußenfläche 13 angepasst. In der gezeigten Ausführungsform weist die Spannungsaufnahmevorrichtung zwei zueinander abgestufte Ringnuten 31a und 31b auf, wie am besten in den Fign. 13 und 17 gezeigt wird. Hierbei ist die Ringnut 31a geeignet den Rohrabschnitt 11 und die Ringnut 31b geeignet den Flanschabschnitt 12 des Rohrstutzens 4 aufzunehmen.

Die Spannungsaufnahmevorrichtung 6 weist einen Spannungsaufnahmevorrichtungsringkörper 33 auf, der über zwei gemeinsam die Spannungsaufnahmevorrichtungsinnenfläche 32 ausbildende Ringkörperelemente 34 verfügt. Die Ringkörperelemente 34 weisen jeweils einen ersten Endabschnitt 35 und einen zweiten Endabschnitt 36 auf, wobei die ersten Endabschnitte 35 um eine Schwenkachse Y-Y schwenkbeweglich zueinander angeordnet sind. Die Schwenkachse Y-Y verläuft parallel zur Längsmittelachse X-X. An jedem zweiten Endabschnitt 36 ist ein Verbindungselement 37 angeordnet, die geeignet sind, miteinander zusammenzuwirken, um die zweiten Endabschnitte 36 lösbar zu verbinden. Jedes Verbindungselement 37 verfügt über eine Verbindungsbohrung 56 mit einer Lagerbohrungsmittelachse W-W. Die beiden Verbindungselemente 37 werden mittels eines nicht dargestellten, in den beiden fluchtenden Verbindungsbohrungen 56 angeordneten Verschlusselements, bspw. eine Verschraubung, ein Splintbolzen oder dergleichen, miteinander verbunden. Hierdurch wirken die beiden Verbindungselemente 37a und 37b zusammen. Zur besseren Unterscheidung werden die Bezugszeichen für die Ringköperelemente 34, die ersten und zweiten Endabschnitte 35, 36 sowie die Verbindungselemente 37 jeweils mit den Kleinbuchstaben a oder b gekennzeichnet.

Zudem bildet die Spannungsaufnahmevorrichtung 6 einen radial nach innen ragenden Ringvorsprung 38 aus, der einerseits von einer ersten axialen Spannungsaufnahmevorrichtungsstirnfläche 39 und andererseits von einer der ersten axialen Spannungsaufnahmevorrichtungsstirnfläche 39 abgewandten, seitlichen Nutbegrenzungsfläche 40 der wenigstens einen Ringnut 31 begrenzt ist. Zweckmäßigerweise ragt der radial nach innen ragende Ringvorsprung 38 soweit radial nach innen, dass der Ringvorsprung 38 einen Anschlag 41 für die in den Rohrstutzen 4 eingesteckte Rohrleitung 3 ausbildet. Hierdurch wird sichergestellt, dass Rohrleitungsstirnfläche 9 und Flanschabschnittsstirnfläche 18 beim Aufweiten durch das Druckwerkzeug 7 bündig zueinander ausgerichtet sind.

Das Ringkörperelement 34a weist im Bereich des ersten Endabschnitts 35a eine über zwei Lagerschenkel 49 verfügende Lagergabel 50 auf. Jeder Lagerschenkel 49 weist eine Lagerbohrung 51, die aufgrund der als Lagerbohrungsmittelachse dienenden Schwenkachse Y-Y miteinander fluchten.

Im Unterschied zum Ringkörperelement 34a weist das Ringkörperelement 34b im Bereich des ersten Endabschnitts 35b ein über eine in einem Lagerkörper 52 angeordnete Lagerbohrung 53 verfügendes Lagerauge 54 auf. Der Lagerbohrung 53 dient als Lagerbohrungsmittelachse auch die Schwenkachse Y-Y.

Die beiden um die Schwenkachse Y-Y schwenkbeweglich zueinander angeordneten Ringkörperelemente 34a und 34b sind in der dargestellten Ausführungsform über einen Lagerbolzen 55 miteinander verbunden, der bspw. als Splintbolzen ausführbar ist.

Die Spannungsaufnahmevorrichtung 6 umgibt im Betriebszustand das Druckwerkzeug 7, um im Betriebszustand beim Aufweiten der Rohrleitung 3 durch das Druckwerkzeug 7 die herzustellende Rohrleitungseinheit 5 abzustützen. Das Druckwerkzeug 7 verfügt hierzu über einen in einem Gehäuse 42 angeordneten, konisch ausgebildeten, in axialer Richtung der Längsmittelachse X-X verschiebbaren Druckdorn 43. Den Druckdorn 43 umgibt in Umfangsrichtung ein Kraftübertragungselemente 44, insbesondere Kraftübertragungsrollen, aufweisender Kranz 45, der im Betriebszustand um den Druckdorn 43 und die Längsmittelachse X-X rotiert. Auch die Kraftübertragungselemente 44 sind drehbar auf einer Drehachse Z-Z in dem Kranz 45 gelagert. Durch die axiale Verschiebung des Druckdorns 43 werden die Kraftübertragungselemente 44 radial nach außen gedrückt und weiten durch ihre gleichzeitige Rotation um die Drehachse Z-Z die Rohrleitung 3 auf. Mit der Aufweitung der Rohrleitung 3 erfolgt in der Ausführungsform eine Rohrleitungswandstärkenreduzierung, wodurch sich die Rohrleitungseinheit 5 ausbildet.

Die radiale Aufweitung wird mittels Druckwerkzeug 7, zweckmäßigerweise des Einwalzwerkzeugs, erreicht und wird auch als Haftaufweitung der Rohrleitung 3 bezeichnet. Nach dem radialen Aufweiten ist eine Querschnittsfläche der Rohrleitung 3 im Bereich der Aufweitung größer als eine ursprüngliche Querschnittsfläche der Rohrleitung 3. Somit ist durch das radiale Aufweiten der Rohrleitung 3 der aufgeweitete Rohrleitungsinnendurchmesser 46 im Bereich einer Überlappung von Rohrleitung 3 und Rohrstutzen 4 größer als der ursprüngliche Rohrleitungsinnendurchmesser 30.

Die Spannungsaufnahmevorrichtung 6 weist in der gezeigten Ausführungsform darüber hinaus eine der ersten axialen Spannungsaufnahmevorrichtungsstirnfläche 39 entgegengesetzte zweite axiale Spannungsaufnahmevorrichtungsstirnfläche 47 auf, wobei die Spannungsaufnahmevorrichtungsstirnfläche 47 stufenförmig ausgebildet ist, wodurch sich ein die in den Rohrstutzen 4 eingesteckte Rohrleitung 3 radial abstützender ringförmiger Spannungsaufnahmevorrichtungskragen 48 ausbildet. Der Spannungsaufnahmevorrichtungskragen 48 ist ausgebildet, um im Betriebszustand beim Aufweiten der Rohrleitung 3 durch das Druckwerkzeug 7 die Rohrleitung 3 der herzustellenden Rohrleitungseinheit 5 weiter abzustützen.

Das Verfahren zur Herstellung einer Rohrleitungseinheit 5 unter Verwendung eines Systems 1 umfasst als vorbereitende Verfahrensschritte das Bereitstellen einer Rohrleitung 3, das Bereitstellen eines Rohrstutzen 4 und das anschließende Anordnen des Rohrstutzens 4 an der Rohrleitung 3. Dach wird die die Spannungsaufnahmevorrichtung 6 aufweisende Vorrichtung 2 bereitgestellt, die die aus Rohrleitung 3 und Rohrstutzen 4 herzustellende Rohrleitungseinheit 5 aufnimmt, bevor der Spannungsaufnahmevorrichtung verschlossen wird. Im Anschluss daran wird das bereitgestellte Druckwerkzeug 7 in die Rohrleitung 3 eingeführt, sodass die Spannungsaufnahmevorrichtung 6 im Betriebszustand das Druckwerkzeug 7 zumindest teilweise umgibt. Die Rohrleitung 3 wird nun durch das Druckwerkzeug 7 aufgeweitet, um aus Rohrleitung 3 und Rohrstutzen 4 mittels einer Presspassung die Rohrleitungseinheit 5 herzustellen und Rohrleitung 3 und Rohrstutzen 4 mittels Haftaufweitung zu verbinden. Abschließend wird noch das Druckwerkzeug 7 aus der Rohrleitung 3 herausgenommen und die Spannungsaufnahmevorrichtung 6 wird geöffnet, wodurch die aus Rohrleitung 3 und Rohrstutzen 4 hergestellte Rohrleitungseinheit 5 entnehmbar ist.

## Patentansprüche

1. System (1) mit einem Druckwerkzeug (7) zum Aufweiten einer Rohrleitung (3) und mit einer Vorrichtung (2) zur Herstellung einer Rohrleitungseinheit (5) aus der eine Rohrleitungsaußenfläche (8) aufweisenden Rohrleitung (3) und einem über eine Rohrstutzenaußenfläche (13) verfügenden Rohrstutzen (4), wobei die Vorrichtung (2) eine eine Längsmittelachse (X-X) und eine nach radial innen weisende Spannungsaufnahmevorrichtungsinnenfläche (32) aufweisende, ringförmig strukturierte Spannungsaufnahmevorrichtung (6) aufweist, wobei die Spannungsaufnahmevorrichtungsinnenfläche (32) an die Rohrleitungsaußenfläche (8) und/oder die Rohrstutzenaußenfläche (13) angepasst ist, um so die herzustellende Rohrleitungseinheit (5) in einem Betriebszustand zumindest teilweise aufzunehmen, und die Spannungsaufnahmevorrichtung (6) im Betriebszustand das Druckwerkzeug (7) umgibt, um im Betriebszustand beim Aufweiten der Rohrleitung (3) durch das Druckwerkzeug (7) die herzustellende Rohrleitungseinheit (5) abzustützen, wobei die Spannungsaufnahmevorrichtung (6) einen Spannungsaufnahmevorrichtungsringkörper (33) aufweist, der über zwei gemeinsam die Spannungsaufnahmevorrichtungsinnenfläche (32) ausbildende Ringkörperelemente (34) verfügt, die jeweils einen ersten Endabschnitt (35) und einen zweiten Endabschnitt (36) aufweisen, wobei die ersten Endabschnitte (35) um eine Schwenkachse (Y-Y) schwenkbeweglich zueinander angeordnet sind, und wobei an jedem zweiten Endabschnitt (36) ein Verbindungselement (37) angeordnet ist und die Verbindungselemente (37) geeignet sind, miteinander zusammenzuwirken, um die zweiten Endabschnitte (36) lösbar zu verbinden, **dadurch gekennzeichnet, dass** die Spannungsaufnahmevorrichtungsinnenfläche (32) wenigstens eine Ringnut (31) zur wenigstens teilweisen Aufnahme des Rohrstutzens (4) aufweist, wobei die Spannungsaufnahmevorrichtung (6) einen radial nach innen ragenden Ringvorsprung (38) ausbildet, der einerseits von einer ersten axialen Spannungsaufnahmevorrichtungsstirnfläche (39) und andererseits von einer der ersten axialen Spannungsaufnahmevorrichtungsstirnfläche (39) abgewandten, seitlichen Nutbegrenzungsfläche (40) der wenigstens einen Ringnut (31) begrenzt ist, und wobei die Spannungsaufnahmevorrichtung (6) eine der ersten axialen Spannungsaufnahmevorrichtungsstirnfläche (39) entgegengesetzte zweite axiale Spannungsaufnahmevorrichtungsstirnfläche (47) aufweist, die stufenförmig ausgebildet ist, wodurch sich ein die in den Rohrstutzen (4) eingesteckte Rohrleitung (3) radial abstützender ringförmiger Spannungsaufnahmevorrichtungskragen (48) ausbildet.

2. System (1) nach Anspruch 1, **dadurch gekennzeichnet, dass** das System (1) über die die Rohrleitung (3) und den Rohrstutzen (4) aufweisende Rohrleitungseinheit (5) verfügt.

3. System (1) nach Anspruch 1 oder 2, **dadurch gekennzeichnet, dass** die Spannungsaufnahmevorrichtungsinnenfläche (32) stufenförmig ausgebildet ist.

4. System (1) nach einem der vorhergehenden Ansprüche, **dadurch gekennzeichnet, dass** der radial nach innen ragende Ringvorsprung (38) soweit radial nach innen ragt, dass der Ringvorsprung (38) einen Anschlag (41) für die in den Rohrstutzen (4) eingesteckte Rohrleitung (3) ausbildet.

5. Verfahren zur Herstellung einer Rohrleitungseinheit (5) unter Verwendung eines Systems (1) nach einem der Ansprüche 1 bis 4, umfassend die Verfahrensschritte
- Bereitstellen einer Rohrleitung (3),
- Bereitstellen eines Rohrstutzens (4),
- Anordnen des Rohrstutzens (4) an der Rohrleitung (3),
- Bereitstellen der Spannungsaufnahmevorrichtung (6),
- Aufnahme der aus Rohrleitung (3) und Rohrstutzen (4) herzustellenden Rohrleitungseinheit (5) in die Spannungsaufnahmevorrichtung (6) und Verschließen der Spannungsaufnahmevorrichtung (6),
- Bereitstellen des Druckwerkzeuges (7),
- Einstecken des Druckwerkzeuges (7) in die Rohrleitung (3), sodass die Spannungsaufnahmevorrichtung (6) im Betriebszustand das Druckwerkzeug (7) zumindest teilweise umgibt,
- Aufweiten der Rohrleitung (3), um Rohrleitung (3) und Rohrstutzen (4) mittels einer Presspassung zur Rohrleitungseinheit (5) zu verbinden,
- Herausnehmen des Druckwerkzeuges (7) aus der Rohrleitung (3) und
- Öffnen der Spannungsaufnahmevorrichtung (6) und Entnahme der aus Rohrleitung (3) und Rohrstutzen (4) hergestellten Rohrleitungseinheit (5).

## Claims

1. System (1) having a pressure tool (7) for expanding a pipeline (3) and a device (2) for producing a pipeline unit (5) from the pipeline (3) having a pipeline outer surface (8) and a pipe connector (4) having a pipe connector outer surface (13), wherein the device (2) has an annularly structured stress-relieving device (6) having a longitudinal central axis (X-X) and a radially inwardly pointing stress-relieving device inner surface (32), wherein the stress-relieving device inner surface (32) is adapted to the pipeline outer surface (8) and/or the pipe connector outer surface (13) in order to at least partially receive the pipeline unit (5) to be produced in an operating state, and the stress-relieving device (6) surrounds a pressure tool (7) in the operating state so as to support the pipeline unit (5) to be produced in the operating state when the pipeline (3) is expanded by the pressure tool (7), **characterized in that** the stress-relieving device (6) has a stress-relieving device annular body (33), which has two annular body elements (34) that together form the stress-relieving device inner surface (32), which elements respectively have a fist end section (35) and a second end section (36), wherein the first end sections (35) are arranged pivotally moveable with respect to one another about a pivot axis (Y-Y), and wherein a connection element (37) is arranged on each second end section (36) and the connection elements (37) are suitable for interacting with one another in order to releasably connect the second end sections (36), wherein the stress-relieving device inner surface (32) has at least one annular groove (31) for at least partially receiving the pipe connector (4), wherein the stress-relieving device (6) forms an annular projection (38) projecting radially inwards, which is delimited on one side by a first axial stress-relieving device end face (39) and on the other side by a lateral groove boundary surface (40) of the at least one annular groove (31) facing away from the first axial stress-relieving device end face (39) and wherein the stress-relieving device (6) has a second axial stress-relieving device end face (47) opposite the first axial stress-relieving device end face (39), which is stepped, which forms an annular stress-relieving device collar (48) radially supporting the pipeline (3) inserted into the pipe connector (4).

2. System (1) according to Claim 1, **characterized in that** the system (1) has the pipeline unit (5) having the pipeline (3) and the pipe connector (4).

3. System (1) according to Claim 1 or 2, **characterized in that** the stress-relieving device inner surface (32) is stepped.

4. System (1) according to Claim 1, **characterized in that** the annular projection (38) projecting radially inwards projects radially inwards to such an extent that the annular projection (38) forms a stop (41) for the pipeline (3) inserted into the pipe connector (4).

5. Method for producing a pipeline unit (5) using a system (1) according to one of Claims 1 to 4 comprising the method steps
- providing a pipeline (3),
- providing a pipe connector (4),
- arranging the pipe connector (4) on the pipeline (3),
- providing a stress-relieving device (6),
- inserting the pipeline unit (5) to be produced from pipeline (3) and pipe connector (4) into the stress-relieving device (6) and closing the stress-relieving device (6),
- providing a pressure tool (7),
- inserting the pressure tool (7) into the pipeline (3) such that the stress-relieving device (6) at least partially surrounds the pressure tool (7) in the operating state,
- expanding the pipeline (3) to connect the pipeline (3) and pipe connector (4) by means of an interference fit to the pipeline unit (5),
- removing the pressure tool (7) from the pipeline (3) and
- opening the stress-relieving device (6) and removing the pipeline unit (5) produced from pipeline (3) and pipe connector (4).

## Revendications

1. Système (1) avec un outil de compression (7) destiné à élargir une canalisation (3) et avec un dispositif (2) destiné à fabriquer une unité de canalisation (5) à partir de la canalisation (3) présentant une surface extérieure de canalisation (8) et d'un embout de tube (4) disposant d'une surface extérieure d'embout de tube (13), dans lequel le dispositif (2) présente un dispositif d'absorption de tension (6) structuré de manière annulaire, présentant un axe médian longitudinal (X-X) et une surface intérieure de dispositif d'absorption de tension (32) pointant vers l'intérieur radialement, dans lequel la surface intérieure de dispositif d'absorption de tension (32) est adaptée à la surface extérieure de canalisation (8) et/ou à la surface extérieure d'embout de tube (13) pour recevoir au moins en partie dans un état de fonctionnement l'unité de canalisation (5) à fabriquer, et le dispositif d'absorption de tension (6) entoure dans l'état de fonctionnement l'outil de compression (7) pour soutenir dans l'état de fonctionnement l'unité de canalisation (5) à fabriquer lors de l'élargissement de la canalisation (3) par l'outil de compression, dans lequel le dispositif d'absorption de tension (6) présente un corps annulaire de dispositif d'absorption de tension (33), qui dispose de deux éléments de corps annulaire (34) réalisant conjointement la surface intérieure de dispositif d'absorption de tension (32), qui présentent respectivement une première section d'extrémité (35) et une deuxième section d'extrémité (36), dans lequel les premières sections d'extrémité (35) sont disposées les unes par rapport aux autres de manière mobile par pivotement autour d'un axe de pivotement (Y-Y), et dans lequel un élément de liaison (37) est disposé sur chaque deuxième section d'extrémité (36) et les éléments de liaison (37) sont adaptés pour coopérer les uns avec les autres pour relier de manière amovible les deuxièmes sections d'extrémité (36),
**caractérisé en ce que**
la surface intérieure de dispositif d'absorption de tension (32) présente au moins une rainure annulaire (31) destinée à recevoir au moins en partie l'embout tubulaire (4), dans lequel le dispositif d'absorption de tension (6) réalise une partie faisant saillie annulaire (38) dépassant radialement vers l'intérieur, qui est délimitée d'une part par une première surface frontale de dispositif d'absorption de tension axiale (39) et d'autre part par une surface de limitation de rainure (40) latérale, opposée à la première surface frontale de dispositif d'absorption de tension axiale (39), de l'au moins une rainure annulaire (31), et dans lequel le dispositif d'absorption de tension (6) présente une deuxième surface frontale de dispositif d'absorption de tension axiale (47) opposée à la première surface frontale de dispositif d'absorption de tension axiale (39), qui est réalisée de manière étagée, ce qui permet de former un rebord de dispositif d'absorption de tension (48) annulaire soutenant radialement la canalisation (3) enfichée dans l'embout de tube (4).

2. Système (1) selon la revendication 1, **caractérisé en ce que** le système (1) dispose de l'unité de canalisation (5) présentant la canalisation (3) et l'embout de tube (4).

3. Système (1) selon la revendication 1 ou 2, **caractérisé en ce que** la surface intérieure de dispositif d'absorption de tension (32) est réalisée de manière étagée.

4. Système (1) selon l'une quelconque des revendications précédentes, **caractérisé en ce que** la partie faisant saillie annulaire (38) dépassant radialement vers l'intérieur dépasse si loin radialement vers l'intérieur que la partie faisant saillie annulaire (38) réalise une butée (41) pour la canalisation (3) enfichée dans l'embout de tube (4).

5. Procédé de fabrication d'une unité de canalisation (5) en utilisant un système (1) selon l'une quelconque des revendications 1 à 4, comprenant les étapes de procédé
- de préparation d'une canalisation (3),
- de préparation d'embout de tube (4),
- de disposition de l'embout de tube (4) sur la canalisation (3),
- de préparation du dispositif d'absorption de tension (6),
- de réception de l'unité de canalisation (5) à fabriquer à partir de la canalisation (3) et de l'embout de tube (4) dans le dispositif d'absorption de tension (6) et la fermeture du dispositif d'absorption de tension (6),
- la préparation de l'outil de compression (7),
- l'enfichage de l'outil de compression (7) dans la canalisation (3) si bien que le dispositif d'absorption de tension (6) entoure au moins en partie dans l'état de fonctionnement l'outil de compression (7),
- l'élargissement de la canalisation (3) pour relier la canalisation (3) et l'embout de tube (4) au moyen d'un ajustement pressé en une unité de canalisation (5),
- le retrait de l'outil de compression (7) hors de la canalisation (3), et
- l'ouverture du dispositif d'absorption de tension (6) et le prélèvement de l'unité de canalisation (5) fabriquée à partir de la canalisation (3) et de l'embout de tube (4).
